# FASCICULE DE BREVET EUROPEEN

(11) **EP 0 526 261 B1**
(45) Date de publication et mention de la délivrance du brevet: **10.08.1994**
(21) Numéro de dépôt: 92401266.9
(22) Date de dépôt: 06.05.1992
(51) Int. Cl.: E04D 3/36, E04D 5/14, F16B 25/10, F16B 35/04, E04F 13/08

(54) **Structure composite, notamment pour le bâtiment**
Verbundkonstruktion, insbesondere für Gebäude
Composite structure, specially for buildings

(30) Priorité: 07.05.1991 FR 9105609
(43) Date de publication de la demande: 03.02.1993
(73) Titulaire: Ovaert, Francis, 75014 Paris (FR); Potet, Pierre, F-09240 La Bastide de Seron (FR)
(72) Inventeur: Ovaert, Francis, 75014 Paris (FR); Potet, Pierre, F-09240 La Bastide de Seron (FR)
(74) Mandataire: Jacobson, Claude

(56) Documents cités:
- AT-B- 380 732
- DE-A- 1 960 604
- DE-A- 2 617 099
- US-A- 3 850 073
- US-A- 4 453 361

## Description

La présente invention concerne les structures composites dans lesquelles une couche est fixée sur une tôle dont l'envers est inaccessible. Elle s'applique notamment à la mise en place de couvertures isolantes ou de bardages de façades, dans le domaine du bâtiment.

Si l'on considère par exemple les couvertures isolantes, qui comportent une couche isolante constituée de plaques et un revêtement d'étanchéité, l'ensemble étant fixé sur un élément porteur de toiture constitué de tôles nervurées fixées sur une charpente, on utilise actuellement des vis autoperceuses-taraudeuses à tête fraisée, de faible diamètre (diamètre 3 mm à diamètre 6 mm), de longueur supérieure à l'épaisseur des plaques isolantes (10 à 30 mm de plus), fixées par l'intermédiaire du filetage dans les plages supérieures de la tôle nervurée; une rondelle métallique de répartition, à cuvette centrale percée et fraisée, de faible épaisseur et de grand diamètre (environ 70 mm), est interposée entre la tête de vis et la face supérieure de la plaque isolante. Le revêtement d'étanchéité est ensuite collé ou soudé sur la face supérieure des plaques isolantes et sur les rondelles de répartition, qui sont théoriquement dans le plan supérieur des plaques isolantes.

Une variante consiste à mettre en oeuvre les fixations, comportant rondelle et vis, après mise en place d'une première membrane d'étanchéité; une seconde membrane recouvre ensuite la première et les rondelles et têtes de vis apparentes. Une autre variante consiste à mettre en oeuvre les fixations, comportant des rondelles de forme allongée et les vis, en lisière du lé de revêtement d'étanchéité; le lé adjacent recouvre ensuite le premier lé et l'ensemble des rondelles et têtes de vis apparentes.

L'utilisation de telles vis est loin d'être satisfaisante : les vis sont mises en place au moyen d'une visseuse électrique, dont la vitesse de rotation est rapide et le couple élevé. Il arrive fréquemment, notamment si les plaques isolantes sont denses et peu compressibles et si la tôle est mince, que la vis, arrivée en butée sur sa rondelle, continue à tourner sans pouvoir s'enfoncer. De ce fait, le diamètre du trou de la tôle devient égal au diamètre extérieur des filets de la vis, et la fixation n'est plus performante.

Pour les mêmes raisons, vitesse et/ou couple de vissage élevé, la vis peut se visser trop profondément dans la tôle nervurée, la tête de vis s'enfonçant avec la rondelle de répartition, qui peut même se plier, dans la plaque isolante. Dans ce cas, le revêtement d'étanchéité n'est pas appliqué sur un support continu et plat, ce qui nuit à son bon fonctionnement. Ce phénomène est aggravé si l'isolant employé est très compressible, par exemple avec des plaques de laine minérale. De plus, un défaut esthétique apparaît en sous-face de la toiture : la vis déforme vers le haut la plage de tôle nervurée, de sorte que celle-ci n'est plus plane.

Par ailleurs, même si la vis est correctement mise en place, lorsque la toiture est terminée, la vis peut, sous l'effet d'une charge, par exemple lors de la circulation d'une personne sur la rondelle de répartition et la tête de vis, s'enfoncer au niveau de la tôle nervurée d'un ou plusieurs pas de vis; les filets extérieurs de la vis ont dans ce cas agrandi le trou de la tôle, et la fixation n'est plus performante.

Pour supprimer ces inconvénients et garantir une grande fiabilité de la fixation, quelle que soit la compressibilité des plaques isolantes, on a proposé des structures composites du type comprenant une couche fixée sur une tôle par au moins un dispositif de fixation, ce dispositif comprenant d'une part un organe d'assemblage fileté constitué par une tige comportant une tête d'entraînement en rotation à une extrémité, une partie filetée à l'autre extrémité, et, entre la partie filetée et la tête, une partie lisse adjacente à la partie filetée, et d'autre part un élément de répartition sur lequel prend appui la tête d'entraînement en rotation de cet organe, la longueur de l'organe d'assemblage, jusqu'à la partie filetée, correspondant à l'épaisseur de la couche et de l'élément de répartition, éventuellement après compression prédéterminée de la couche, augmentée de la longueur d'un collet de déformation de la tôle.

Le US-A-4 453 361 décrit une structure de ce type, dans laquelle le diamètre de la partie lisse de l'organe d'assemblage est réduit jusqu'à sensiblement le diamètre de fond de filet de la partie filetée.

Cette conception présente de sérieux inconvénients :
- l'organe d'assemblage peut osciller librement dans le trou de la tôle, de sorte qu'on ne peut fixer ainsi ni un bardage vertical, ni une couche souple d'isolation surmontée d'une membrane d'étanchéité, laquelle formerait rapidement des plis;
- de l'air humide peut s'introduire entre le trou de la tôle et la partie lisse, et engendrer une corrosion de la tôle. Lorsque la rouille s'est développée, la résistance à l'arrachement chute fortement;
- l'organe d'assemblage n'est pas à l'abri d'un dévissage inopiné sous l'effet des vibrations.

L'invention a pour but d'éliminer ces inconvénients, en assurant un positionnement ferme de l'axe de l'organe d'assemblage et une protection contre la corrosion et contre le dévissage.

A cet effet, l'invention a pour objet une structure composite du type précité, caractérisée en ce que le diamètre de la partie lisse de l'organe d'assemblage est nettement supérieur au diamètre de fond de filet de sa partie filetée, de sorte que le collet est intérieurement maté et épouse sensiblement ladite partie lisse.

Suivant d'autres caractéristiques :
- le diamètre de ladite partie lisse est à peu près égal à la demi-somme dudit diamètre de fond de filet et du diamètre extérieur du filetage;
- l'organe d'assemblage se termine, au-delà de la partie filetée, par une pointe autoperceuse ou, en variante, par un foret;
- la partie lisse s'étend jusqu'à la tête de l'organe d'assemblage;
- la structure forme une couverture de bâtiment, ladite couche étant une couche d'isolation éventuellement surmontée d'une membrane d'étanchéité, la tête de chaque organe d'assemblage prenant appui sur une rondelle constituant ledit élément de répartition et le dispositif de fixation étant éventuellement recouvert par la membrane d'étanchéité;
- la structure forme un revêtement de façade;
- ladite couche comprend un bardage et un matelas d'isolation intermédiaire à compression prédéterminée, la tôle constituant une ossature de support du bardage;
- ladite couche comprend des plaques rigides, la tôle constituant une ossature de support, notamment sous forme de lisses, de ces plaques.

Quelques exemples de réalisation de l'invention vont maintenant être décrits en regard des dessins annexés, sur lesquels :
- la Figure 1 représente en coupe la fixation d'une couche d'isolation sur une tôle support, pour la couverture d'un bâtiment, conformément à l'invention;
- la Figure 2 représente à plus grande échelle un détail de cette fixation;
- la Figure 3 représente en perspective, avec arrachement, la fixation d'un bardage de façade de bâtiment sur une ossature de support, conformément à l'invention;
- la Figure 4 est une vue prise en coupe suivant la ligne IV-IV de la Figure 3; et
- la Figure 5 illustre, de façon analogue à la Figure 1, une autre application de l'invention.

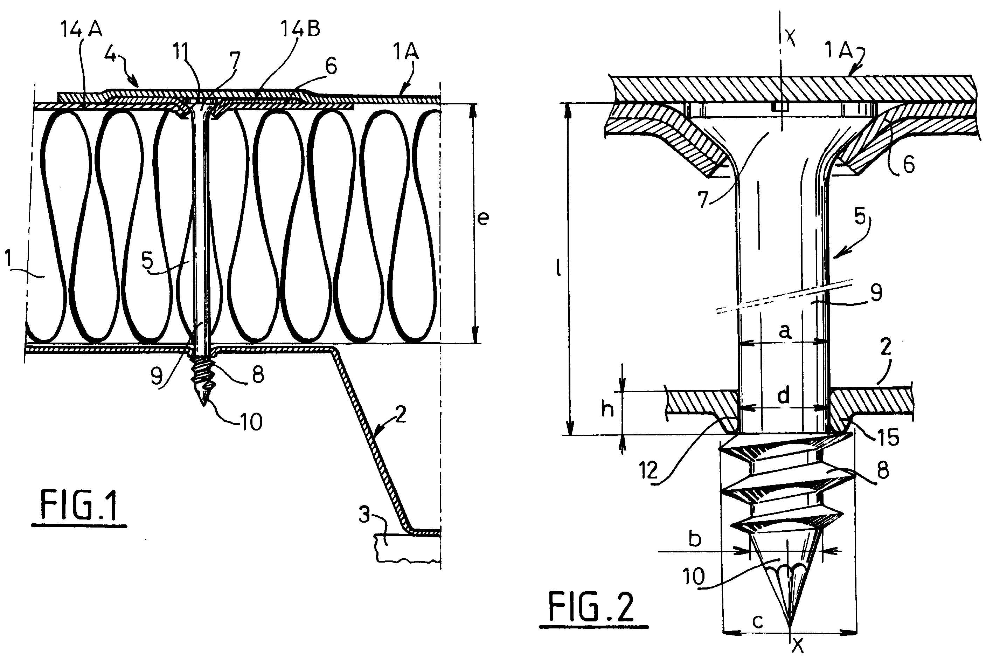

La Figure 1 représente la fixation d'une plaque d'isolation 1 d'épaisseur e, surmontée d'une membrane d'étanchéité 1A, sur une tôle nervurée 2 préalablement fixée sur la charpente 3 d'un bâtiment. Cette fixation s'effectue sur les sommets d'ondes de la tôle 2, au moyen de dispositifs 4 constitués chacun d'un organe d'assemblage 5, qui sera désigné dans la suite par le terme "vis" pour plus de commodité, et d'une rondelle de répartition 6. Les vis 5 et la tôle 2 comportent un revêtement anti-corrosion.

La vis 5 comporte une tête fraisée 7 à son extrémité supérieure, une partie d'extrémité inférieure 8 filetée située sous la tôle 2, et, entre la tête et cette partie 8, un corps cylindrique lisse 9. La partie filetée 8 est prolongée vers le bas par une pointe coupante autoperceuse 10. La vis 5 est réalisée de façon classique par simple déformation sans copeau d'une tige ayant le diamètre du corps 9, de sorte que ce dernier (Figure 2) a un diamètre a qui est intermédiaire entre le diamètre b de fond de filet et le diamètre extérieur c de la partie 8, et peut notamment être à peu près égal à (b + c)/2. Par ailleurs, la hauteur l de la tête 7 et du corps 9 est voisine de l'épaisseur e à fixer, comme ceci sera précisé plus loin.

La rondelle 6 est circulaire ou de forme allongée et présente un trou central fraisé 11 dont la périphérie est conjuguée de la tête de vis 7.

La mise en oeuvre du dispositif 4 à l'aide d'une visseuse électrique comprend la succession d'opérations suivantes, supposées effectuées le long d'une bordure de deux lés du revêtement d'étanchéité 1A:
- mise en place de la rondelle de répartition 6 sur la face supérieure du bord d'un lé 14A de la membrane 1A;
- mise en place de la vis 5 dans le trou 11 de la rondelle et à travers le lé 14A et la couche isolante 1;
- perçage de la tôle 2 par rotation de la pointe 10; la tôle est alors déformée localement vers le bas;
- vissage de la partie filetée 8 dans la tôle 2 jusqu'à ce que la tête de filetage 12, constituée par la jonction du corps 9 de la vis et de la partie filetée 8, ait dépassé vers le bas le trou foré, qui a alors le même diamètre b que le fond de filet de la partie filetée 8;
- puis la vis tourne rapidement sur elle-même, entraînée par la visseuse; comme le diamètre a du corps 9 de la vis est nettement supérieur au diamètre b, donc au diamètre du trou foré, ce dernier est élargi par matage radial et forme un collet 15 dont la surface interne est à peu près lisse et épouse étroitement, sur toute sa hauteur h, la partie lisse 9. La hauteur h est dans tous les cas nettement supérieure à l'épaisseur de la tôle 2, et le diamètre d du collet est égal à a.

Par suite, la vis ne continue pas à s'enfoncer, la tête de filetage 12 restant sensiblement dans le plan de la face inférieure de la tôle 2, et le collet 15 forme un palier qui positionne fermement l'axe X-X de la vis 5 tout en permettant à cette vis de tourner autour de son axe et de coulisser axialement.

Lorsque tous les dispositifs 4 sont en place, le bord d'un second lé 14B de la membrane d'étancheité 1A est enfin collé ou soudé sur le bord du premier lé et sur les rondelles 6.

Sous l'effet d'une charge appliquée verticalement sur la vis, celle-ci peut s'enfoncer, ainsi que la rondelle 6, dans la plaque isolante 1, sans perte ultérieure de résistance à l'arrachement. De plus, grâce au guidage vertical assuré par le collet 15, la membrane d'étanchéité ne risque pas de se plisser. Par ailleurs, le contact étroit entre le collet 15 et le corps 9 protège l'assemblage contre la corrosion, bien que, du fait du vissage de la vis 5, le collet ne comporte pas de revêtement anti-corrosion.

On remarque également que les vis 5 sont indévissables une fois en place, puisque le matage du collet 15 a fait pratiquement disparaître les filets creusés dans la tôle par la partie filetée 8.

La longueur exacte l de la tête 7 et du corps 9 est calculée de façon que lorsque la tête de filetage 12 bute contre la tôle 2, la surface supérieure de la tête de vis 7 se trouve dans le plan de la face supérieure de la rondelle 6. Ainsi, la longueur l doit tenir compte de la longueur h du collet 15.

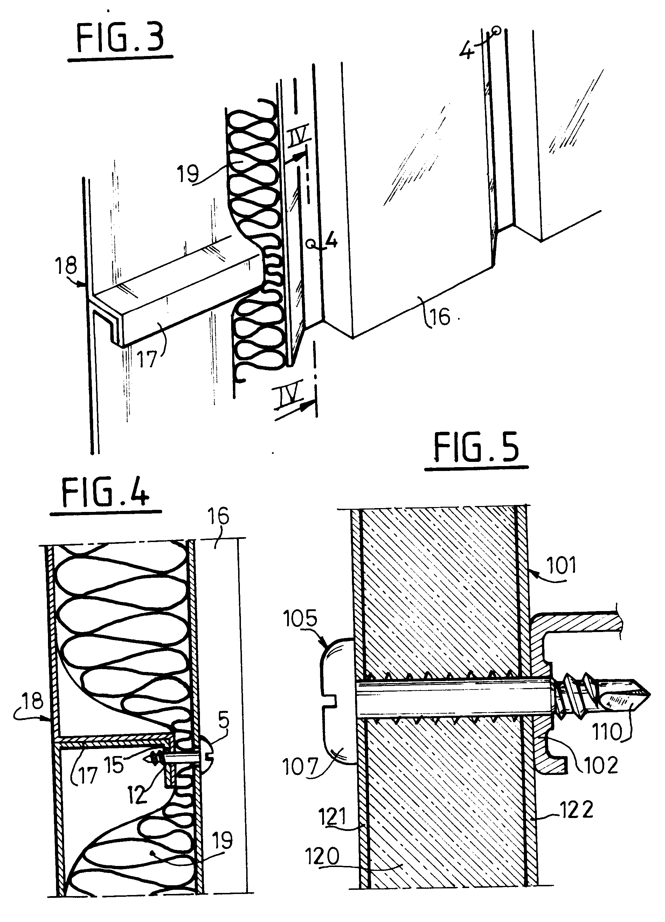

Les Figures 3 et 4 montrent l'application de l'invention à la fixation par des dispositifs 4 d'un bardage métallique 16 à ondes verticales sur les nervures horizontales 17 d'une ossature métallique 18, avec interposition d'un matelas isolant souple 19, par exemple en laine minérale, pour revêtir une façade de bâtiment. L'utilisation de vis suivant l'invention permet de ne comprimer le matelas 19 que dans une mesure prédéterminée à l'emplacement des fixations, comme on le voit bien sur la Figure 4, la tête de filetage 12 venant buter derrière les nervures 17. On peut ainsi améliorer la planéité de la face extérieure du bardage. On comprend que les têtes des vis 5 prennent directement appui sur le bardage 16. Les collets 15 maintiennent les vis 5 en position horizontale.

La Figure 5 illustre l'utilisation d'une vis 105 analogue à celle de la Figure 1, mais à tête 107 plate, pour fixer une structure peu compressible 101, par exemple une structure sandwich verticale comprenant une plaque en plâtre ou en bois 120 et deux peaux 121, 122, sur une tôle support 102 épaisse telle qu'une lisse. Dans ce cas, les vis 105 se terminent de préférence par un foret 110. Si nécessaire, une rondelle souple d'étanchéité (non représentée) peut être pressée entre la tête 107 et la peau extérieure 121, laquelle sert elle-même d'élément de répartition de l'effort de serrage comme le bardage 16 dans l'exemple des Figures 3 et 4.

De façon surprenante, on a constaté que la résistance à l'arrachement du dispositif de fixation suivant l'invention est pratiquement la même que celle des vis classiques dont le filet reste en prise avec la tôle support.

## Revendications

1. Structure composite, du type comprenant une couche (1; 16, 19; 101) fixée sur une tôle (2; 18; 102) par au moins un dispositif de fixation (4; 105), ce dispositif comprenant d'une part un organe d'assemblage fileté (5; 105) constitué par une tige comportant une tête (7) d'entraînement en rotation à une extrémité, une partie filetée (8) à l'autre extrémité, et, entre la partie filetée et la tête, une partie lisse (9) adjacente à la partie filetée, et d'autre part un élément de répartition (6; 16; 121) sur lequel prend appui la tête d'entraînement en rotation de cet organe, la longueur (l) de l'organe d'assemblage, jusqu'à la partie filetée (8), correspondant à l'épaisseur (e) de la couche et de l'élément de répartition, éventuellement après compression prédéterminée de la couche, augmentée de la longueur d'un collet (15) de déformation de la tôle, caractérisée en ce que le diamètre (a) de la partie lisse (9) de l'organe d'assemblage est nettement supérieur au diamètre (b) de fond de filet de sa partie filetée (8), de sorte que le collet (15) est intérieurement maté et épouse sensiblement ladite partie lisse.

2. Structure composite suivant la revendication 1, caractérisée en ce que le diamètre (a) de ladite partie lisse (9) est à peu près égal à la demi-somme dudit diamètre (b) de fond de filet et du diamètre extérieur (c) du filetage.

3. Structure composite suivant la revendication 1 ou 2, caractérisée en ce que l'organe d'assemblage se termine, au-delà de la partie filetée (8), par une pointe autoperceuse (10).

4. Structure composite suivant la revendication 1 ou 2, caractérisée en ce que l'organe d'assemblage se termine, au-delà de la partie filetée, par un foret (110).

5. Structure composite suivant l'une quelconque des revendications 1 à 4, caractérisée en ce que la partie lisse (9) s'étend jusqu'à la tête (7) de l'organe d'assemblage.

6. Structure composite suivant l'une quelconque des revendications 1 à 5, caractérisée en ce qu'elle forme une couverture de bâtiment, ladite couche (1) étant une couche d'isolation éventuellement surmontée d'une membrane d'étanchéité (1A), la tête (7) de chaque organe d'assemblage (5) prenant appui sur une rondelle (6) constituant ledit élément de répartition et le dispositif de fixation étant éventuellement recouvert par la membrane d'étanchéité.

7. Structure suivant l'une quelconque des revendications 1 à 5, caractérisée en ce qu'elle forme un revêtement de façade (16, 19; 101).

8. Structure suivant la revendication 7, caractérisée en ce que ladite couche (16, 19) comprend un bardage (16) et un matelas d'isolation intermédiaire (19) à compression prédéterminée, la tôle (18) constituant une ossature de support du bardage.

9. Structure suivant la revendication 7, caractérisée en ce que ladite couche comprend des plaques rigides (101), la tôle (102) constituant une ossature de support, notamment sous forme de lisses, de ces plaques.

## Patentansprüche

1. Verbundstruktur von einer Art, welche eine Schicht (1; 16, 19; 101) aufweist, die mit Hilfe von mindestens einer Befestigungsvorrichtung (4; 105) an einem Blech (2; 18; 102) befestigt ist, wobei diese Befestigungsvorrichtung einerseits ein mit einem Gewinde versehenes Zusammenbauelement (5; 105) enthält, welches aus einem Schaft besteht, welcher an einem seiner Enden einen Kopf (7) für die Einleitung einer Drehbewegung, und an seinem anderen Ende einen Gewindeteil (8) enthält, sowie zwischen diesem Gewindeteil und diesem Kopf einen an den Gewindeteil anschließenden glatten Teil (9), und andererseits ein Verteilerelement (6; 16; 121) aufweist, auf dem der die Drehbewegung einleitende Kopf dieses Elementes aufliegt, wobei die Länge (*1*) dieses Zusammenbauelementes bis zu dem Gewindeteil (8) der Dicke (*e*) der Schicht und des Verteilerelementes, eventuell nach einer vorbestimmten Kompression der Schicht erhöht um die Länge eines Kragens (15) für die Verformung des Bleches, entspricht,
**dadurch gekennzeichnet, daß** der Durchmesser (*a*) des glatten Teils (9) dieses Zusammenbauelementes deutlich größer ist, als der Durchmesser (*b*) am Gewindegrund des Gewindeteils (8), so daß der Kragen (15) innen verstemmt ist und sich weitgehend an diesen glatten Teil anschmiegt.

2. Verbundstruktur nach Anspruch 1,
**dadurch gekennzeichnet,** **daß** der Durchmesser (*a*) dieses glatten Teils (9) etwa gleich der halben Summe dieses Durchmessers (*b*) am Gewindegrund und des Außendurchmessers (*c*) des Gewindeteils ist.

3. Verbundstruktur nach einem der Ansprüche 1 oder 2,
**dadurch gekennzeichnet, daß** das Zusammenbauelement anschließend an den Gewindeteil (8) in einer selbstbohrenden Spitze (10) endet.

4. Verbundstruktur nach einem der Ansprüche 1 oder 2,
**dadurch gekennzeichnet, daß** das Zusammenbauelement anschließend an den Gewindeteil in einem Gewindeschneider (110) endet.

5. Verbundstruktur nach einem der Ansprüche 1 bis 4,
**dadurch gekennzeichnet**, **daß** sich der glatte Teil (10) bis zu dem Kopf (7) dieses Zusammenbauelementes erstreckt.

6. Verbundstruktur nach einem der Ansprüche 1 bis 5,
**dadurch gekennzeichnet, daß** sie eine Abdeckung für ein Gebäude bildet, wobei die genannte Schicht (1) eine Isolierschicht ist, welche eventuell von einer Abdichtungsmembrane (1A) überdeckt wird und sich der Kopf (7) jedes der Zusammenbauelemente (5) an einer Unterlegscheibe (6) abstützt, welche das genannte Verteilerelement bildet und diese Befestigungsvorrichtung eventuell von dieser Abdichtungsmembrane überdeckt wird.

7. Verbundstruktur nach einem der Ansprüche 1 bis 5,
**dadurch gekennzeichnet, daß** sie eine Fassadenverkleidung (16, 19; 101) bildet.

8. Verbundstruktur nach Anspruch 7,
**dadurch gekennzeichnet, daß** die genannte Schicht (16, 19) eine Verkleidung (16) und eine dazwischengelegte Isoliermatte (19) mit vorbestimmter Kompression aufweist, wobei das Blech (18) ein Trägergerüst für diese Verkleidung bildet.

9. Verbundstruktur nach Anspruch 7,
**dadurch gekennzeichnet, daß** die genannte Schicht steife Platten (101) aufweist und das Blech (102) insbesondere in Form von Stringern ein Trägergerüst für diese Platten bildet.

## Claims

1. Composite structure of the type comprising a layer (1; 16, 19; 101) fastened to a metal sheet (2; 18; 102) by means of at least one fastening device (4; 105), this device comprising, on the one hand, a threaded assembly member (5; 105) consisting of a rod having a head (7) at one end for rotational driving, a threaded part (8) at the other end and, between the threaded part and the head, a smooth part (9) adjacent to the threaded part, and, on the other hand, a distribution element (6; 16; 121), on which the head for rotationally driving this member bears, the length (1) of the assembly member up to the threaded part (8) corresponding to the thickness (e) of the layer and of the distribution element, optionally after a predetermined compression of the layer, plus the length of a deformation flange (15) of the metal sheet, characterised in that the diameter (a) of the smooth part (9) of the assembly member is markedly greater than the thread-root diameter (b) of its threaded part (8), so that the flange (15) is internally upset and substantially mates with the said smooth part.

2. Composite structure according to Claim 1, characterised in that the diameter (a) of the said smooth part (9) is approximately equal to half the sum of the said thread-root diameter (b) and of the outside diameter (c) of the thread.

3. Composite structure according to Claim 1 or 2, characterised in that the assembly member terminates beyond the threaded part (8) in a self-drilling tip (10).

4. Composite structure according to Claim 1 or 2, characterised in that the assembly member terminates beyond the threaded part in a drill bit (110).

5. Composite structure according to any one of Claims 1 to 4, characterised in that the smooth part (9) extends as far as the head (7) of the assembly member.

6. Composite structure according to any one of Claims 1 to 5, characterised in that it forms a building covering, the said layer (1) being an insulating layer, optionally surmounted by a sealing membrane (1A), the head (7) of each assembly member (5) bearing on a washer (6) forming the said distribution element, and the fastening device optionally being covered by the sealing membrane.

7. Structure according to any one of Claims 1 to 5, characterised in that it forms a facade lining (16, 19; 101).

8. Structure according to Claim 7, characterised in that the said layer (16, 19) comprises a cladding (16) and an intermediate insulating jacket (19) of predetermined compression, the metal sheet (18) forming a supporting skeleton for the cladding.

9. Structure according to Claim 7, characterised in that the said layer comprises rigid panels (101), the metal sheet (102) forming a supporting skeleton, especially in the form of longitudinal members, for these panels.
